# EUROPÄISCHE PATENTANMELDUNG

(11) **EP 1 237 288 A2**
(43) Veröffentlichungstag der Anmeldung: **04.09.2002**
(21) Anmeldenummer: 02004490.5
(22) Anmeldetag: 27.02.2002
(51) Int. Cl.: H04B 1/38, G01S 13/74

(54) **Gehäuse für eine Vorrichtung, insbesondere einen Transponder, für einen elektromagnetisch bewirkten Datenaustausch**

(30) Priorität: 16.03.2001 DE 10113384; 17.03.2001 DE 20104647 U; 28.02.2001 DE 10109738
(71) Anmelder: Bunert, Peter, 75245 Neulingen (DE)
(72) Erfinder: Bunert, Peter, 75245 Neulingen (DE)
(74) Vertreter: Leitner, Waldemar, Dr. techn.

(57) **Zusammenfassung**

Die Erfindung betrifft ein Gehäuse für eine Vorrichtung, insbesondere einen Transponder (1), für einen elektromagnetisch bewirkten Datenaustausch, in dem ein Antennenelement (A) und eine mit diesem verbundene elektronische Schaltung (S) aufnehmbar sind, wobei das Gehäuse (2) knopfförmig gestaltet ist und zwei Gehäuseteile (3, 4) aufweist.

Erfindungsgemäß ist vorgesehen, daß eines der beiden Gehäuseteile (3, 4) einen Bodenbereich (3a) besitzt, an den sich in radialer Richtung ein umlaufender Wandbereich (3b) anschließt, daß ein zweites Gehäuseteil (4) des Gehäuses (2) in das vorgenannte erste Gehäuseteil (3) eingesetzt ist, daß die Innenkontur (3b') des Wandbereichs (3b) derart auf die Außenkontur (4') des zweiten Gehäuseteils (4) abgestimmt ist, daß das zweite Gehäuseteil (4) in den durch das Wandelement (3b) des ersten Gehäuseteils (3) begrenzten Raum einsetzbar ist, so daß durch die beiden Gehäuseteile (3, 4) ein gekapselter Innenraum (2') des Gehäuses (2) begrenzt und zwischen dem Bodenbereich (3a) des ersten Gehäuseteils (3) und dem zweiten Gehäuseteil (4) ein Aufnahmeraum (5, 6; 7) für das Antennenelement (A) und die elektronische Schaltung (S) ausgebildet ist.

## Beschreibung

Die Erfindung betrifft ein Gehäuse für eine Vorrichtung, insbesondere einen Transponder, für einen elektromagnetisch bewirkten Datenaustausch, in dem ein Antennenelement und eine mit diesem verbundene elektronische Schaltung aufnehmbar sind, wobei das Gehäuse knopfförmig gestaltet ist und zwei Gehäuseteite aufweist.

Aus der EP 0 924 872 ist ein Gehäuse für einen passiven Kleintransponder zum Empfang eines von einem Abfrage- und Lesegerät drahtlos übertragenden Abfragesignals bekannt, wobei das Gehäuse knopflörmig gestaltet ist und zwei Gehäuseteile aufweist, die als Polyester-Lagen ausgebildet sind. Zwischen den Polyester-Lagen ist ein extrem flacher passiver Transponder-TAG zur Kommunikation mit dem Abfrage- und Lesegerät untergebracht. Das Gehäuse des bekannten Transponders besitzt nun den Nachteil, daß es keine hinreichend gute Kapselung des Transponder-TAG's gegen Umwelteinflüsse, insbesondere gegen Feuchtigkeit, ermöglicht.

Aus der EP 97 01 658 ist eine Gehäuseeinrichtung für einen Transponder bekannt, die ein Bodenelement und ein Deckelelement aufweist, wobei die elektronische Schaltung zwischen den Innenflächen dieser beiden Elemente aufgenommen ist. Hierzu ist vorgesehen, daß im Bodenelement und/oder im Deckelelement der Gehäuseeinrichtung zumindest eine Vertiefung ausgebildet ist, in der die elektronische Schaltung eingesetzt ist, wobei die Kontur der Vertiefung auf die Außenkontur der elektronischen Schaltung derart abgestimmt ist, daß durch das Deckelelement die elektronische Schaltung zumindest teilweise überdeckbar ist. Durch Ummanteln dieser Gehäuseeinrichtung mit Kunststoff wird dann der als elektronische Karte ausgebildete Transponder ausgebildet.

Derartige Transponder werden insbesondere in einem Radiofrequenz-Identifikationssystem eingesetzt. Der als elektronische Karte ausgebildete Transponder erlaubt es zwar in vorteilhafter Art und Weise eine einfache und kostengünstige Herstellung. Die Kartenform des Gehäuses und somit des bekannten Transponders besitzt aber den Nachteil, daß sie relativ auffällig ist. Dies ist durchaus bei der Verwendung derartiger Karten-Transponder als Gepäckanhänger erwünscht. Jedoch besteht in letzter Zeit zunehmend ein Bedürfnis nach unauffällig ausgebildeten Transpondem, z. B. dazu, um sie in einer nicht-auffälligen Art und Weise an Gepäckstücken oder anderen Waren anzubringen, um die mit dem Transponder versehenen Waren leichter, insbesondere hinsichtlich ihres Vertriebsweges, kontrollieren zu können.

Aus der DE-C2 42 38 255 ist ein als Gehäusetopf mit kreiszylindrischem Querschnitt ausgebildetes Gehäuse für einen Datenträger in Form eines Transponders bekannt, das einen Boden, eine Seitenwandung und eine an der Außenseite der Seitenwandung ausgebildete umlaufende Nut aufweist. Die Nut wird durch zwei nach außen weisende Wülste gebildet, die ihrerseits mit konstantem Abstand sich gegenüberstehen und an der Außenseite der Seitenwandung des Gehäusetopfes umläufen. An ihrer von der Nut abgewandten Außenseite sind die Wülste abgeflacht und gehen kontinuierlich in die Seitenwandung über, während die Nut selbst im Querschnitt rechteckförmig ausgebildet ist. Der Gehäusetopf ist mit einem Stopfen kraft- und formschlüssig verschlossen. Im Inneren des Gehäusetopfs ist der Datenträger untergebracht und mit Vergußmasse derart vergossen, daß die Vergußmasse dabei den Transponder vollständig bedeckt. Dieses für einen Müllbehälter vorgesehenes Gehäuse besitzt den Nachteil, daß ein hinreichender Schutz der im Inneren aufgenommenen elektronischen Bauteile nur dadurch erreicht werden kann, daß diese vollständig mit Vergußmasse bedeckt sein müssen. Ein derartiger Vergußvorgang ist insbesondere bei empfindlichen Bauteilen von Nachteil.

Es ist daher Aufgabe der vorliegenden Erfindung, ein Gehäuse für eine Vorrichtung, insbesondere einen Transponder, der eingangs genannten Art derart weiterzubilden, daß in einer einfachen und daher kostengünstigen Art und Weise ein kompakt bauendes und unauffälliges Gehäuse geschaffen wird, in dem das Antennenelement und die mit diesem verbundene elektronische Schaltung gegen Umwelteinflüsse geschützt aufnehmbar sind.

Diese Aufgabe wird erfindungsgemäß dadurch gelöst, daß eines der beiden Gehäuseteile einen Bödenbereich besitzt, an den sich in radialer Richtung ein umlaufender Wandbereich anschließt, daß ein zweites Gehäuseteil des Gehäuses in das vorgenannte erste Gehäuseteil eingesetzt ist, daß die Innenkontur des Wandbereichs deart auf die Außenkontur des zweiten Gehäuseteils abgestimmt ist, daß das zweite Gehäuseteil in den durch das Wandelement des ersten Gehäuseteils begrenzten Raum einsetzbar ist, so daß durch die beiden Gehäuseteile ein gekapselter Innenraum des Gehäuses begrenzt und zwischen dem Bodenbereich des ersten Gehäuseteils und dem zweiten Gehäuseteil ein Aufnahmeraum für das Antennenelement und die elektronische Schaltung ausgebildet ist.

Vorteilhafte Weiterbildungen der Erfindung sind Gegenstand der Unteransprüche.

Weitere Einzelheiten und Vorteile der Erfindung sind den Ausführungsbeispielen zu entnehmen, die im folgenden anhand der Figuren beschrieben werden. Es zeigen:
- Figur 1: eine Draufsicht auf ein erstes Ausführungsbeispiel eines Transponders,
- Figur 2: einen Schnitt entlang der Linie II-II der Figur 1,
- Figur 3: eine Explosionsdarstellung des Schnitts der Figur 2,
- Figur 4: eine Draufsicht auf ein zweites Ausführungsbeispiel eines Transponders,
- Figur 5: einen Schnitt entlang der Linie V-V der Figur 4,
- Figur 6: eine Explosionsdarstellung des Schnitts der Figur 5,
- Figur 7: eine Draufsicht auf ein drittes Ausführungsbeispiel des Transponders,
- Figur 8: einen Schnitt entlang der Linie VII-VII der Figur 7,
- Figur 9: eine Explosionsdarstellung des Schnitts der Figur 8,
- Figur 10: eine Draufsicht auf ein viertes Ausführungsbeispiel eines Transponders,
- Figur 11: einen Schnitt entlang der Linie XI-XI der Figur 10, und
- Figur 12: eine Explosionsdarstellung des Schnitts der Figur 11.

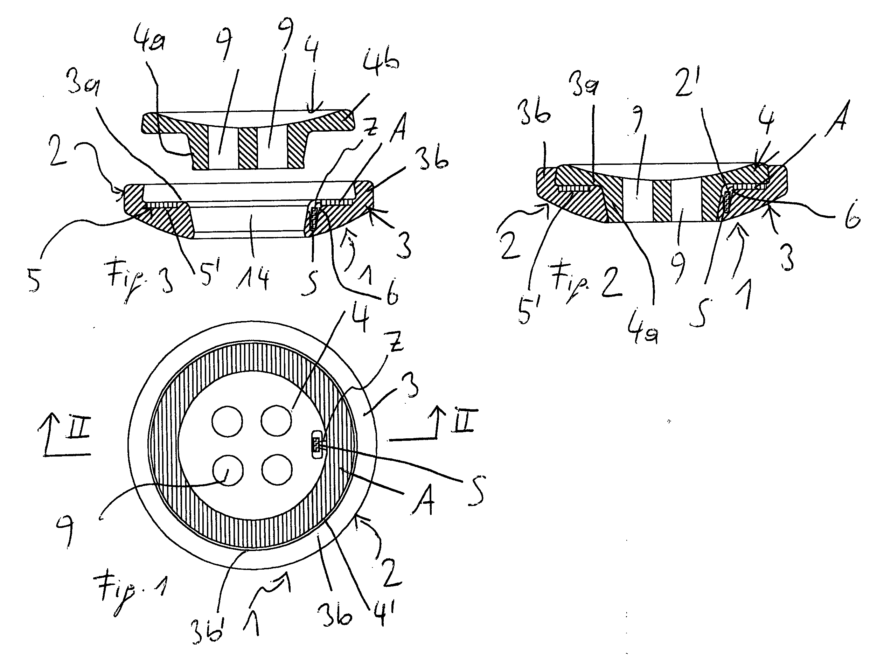

In den Figuren 1-3 ist nun ein erstes Ausführungsbeispiel eines allgemein mit 1 bezeichneten Transponders dargestellt, der ein Gehäuse 2 aufweist, in dem ein Antennenelement A und eine über Zuführleitungen Z mit dem Antennenelement A verbundene elektronische Schaltung S, insbesondere ein Mikrochip, angeordnet ist. Das Antennenelement A sowie die elektronische Schaltung S des Transponders 1 sind bekannt und müssen daher nicht mehr näher beschrieben werden.

Das Gehäuse 2 des eine Vorrichtung für einen elektromagnetisch bewirkten Datenaustausch darstellenden Transponders 1 ist knopfförmig ausgebildet; der Durchmesser des Gehäuses 2 ist somit wesentlich größer als seine Höhe. Eine derartige Gehäusegestalt besitzt nicht nur den Vorteil, daß hierdurch ein besonders kompakt bauender Transponder 1 ermöglicht wird. Vielmehr besitzt die knopfförmige Gestalt des Gehäuses 2 desweiteren den Vorteil, daß hierdurch ein besonders unauffällig bauender Transponder 1 geschaffen wird, welcher sich ohne technische Hilfsmittel in vorteilhafter Art und Weise von konventionellen Knöpfen nicht unterscheiden läßt. Der beschriebene Transponder 1 ist daher in vorteilhafter Art und Weise z. B. bei Kleidungsstücken dazu einsetzbar, um z. B. ihren Vertriebsweg einfach kontrollieren und damit der zunehmenden Produktpiraterie wirksam entgegenwirken zu können.

Ein weiterer Vorteil des beschriebenen Transponders 1 besteht darin, daß er auch in unauffälliger Art und Weise zu Identifizierungszwecken eingesetzt werden kann, z. B. dadurch, daß durch den knopfförmig ausgebildeten Transponder 1 Kleidungsstücke entsprechende markiert werden, um sie in Reinigungsanstalten und/oder Wäschereien leichter wieder finden zu können. Ein weiteres Beispiel für den vielfältigen Einsatzbereich des beschriebenen Transponders 1 besteht z. B. darin, daß der beschriebene Transponder 1 als eine leicht auszulesende Markierungsmarke für Tiere dient.

Das Gehäuse 2 weist ein erstes Gehäuseteil 3, das in dem hier gezeigten Fall als Gehäuseunterteil ausgebildet ist, und ein in das erste Gehäuseteil 3 einsetzbares oder auf dieses aufsetzbares zweites Gehäuseteil 4, das im hier gezeigten Fall als Gehäuseoberteil ausgebildet ist, auf, wobei im zusammengesetzten Zustand dieser beiden Gehäuseteile ein - vorzugsweise hermetisch abgeschlossener - Innenraum 2' ausgebildet ist, in dem das Antennenelement A und die elektronische Schaltung S aufgenommen sind.

In dem hier beschriebenen Fall ist in einem Bodenbereich 3a des ersten Gehäuseteils 3 eine auf die Form des Antennenelements A abgestimmte, im hier gezeigten Fall umlaufende Vertiefung 5' vorgesehen, die einen Aufnahmeraum 5 für das Antennenelement A ausbildet. Der Bodenbereich 3a des ersten Gehäuseteils 3 weist desweiteren eine Ausnehmung 6' auf, die einen Aufnahmeraum 6 für die elektronische Schaltung S ausbildet. An den Bodenbereich 3a des ersten Gehäuseteils 3 schließt sich in radialer Richtung ein umlaufender Wandbereich 3b an, deren Innenkontur 3b' auf eine Außenkontur 4' des zweiten Gehäuseteils 4 derart abgestimmt ist, daß das zweite Gehäuseteil 4 in das erste Gehäuseteil 3 einsetzbar ist und in diesem eingesetzten Zustand die das Antennenelement A aufnehmende Vertiefung 5' sowie die die elektronische Schaltung S aufnehmende Ausnehmung 6' des Bodens 3a des ersten Gehäuseteils 3 überdeckt. Die Höhe des umlaufenden Wandbereichs 3b ist hierbei im wesentlichen gleich der Dicke des zweiten Gehäuseteils 4 in seinem Randbereich.

Der Durchmesser des zweiten Gehäuseteils 4 ist um die Dicke der umlaufenden Wand 3b geringer ist als derjenige des ersten Gehäuseteils 3 des Gehäuses 2, so daß der Rand des zweiten Gehäuseteils 4 an der Innenwand des umlaufenden Wandbereichs 3b des ersten Gehäuseteils 3 anliegt. Hierdurch wird in einfacher Art und Weise eine Kapselung des Innenraums 2' des Gehäuses 1 erreicht. Eine derartige Gestaltung ist aber nicht zwingend. Vielmehr ist es auch möglich, daß das zweite Gehäuseteil 4 einen größeren Durchmesser aufweist als das erste Gehäuseteil 3 und mit einem dem Wandelement 3b entsprechenden Wandelement versehen ist, so daß das erste Gehäuseteil 3 in dem durch das Wandelement des zweiten Gehäuseteils 4 begrenzten Raum einsetzbar ist, daß also das zweite Gehäuseteil 4 auf das erste Gehäuseteil 3 aufsetzbar ist, d. h. daß also das erste Gehäuseteil 3 in das zweite Gehäuseteil 4 einsetzbar ist. Im fölgenden wird jedoch nur der Fall beschrieben, daß das zweite Gehäuseteil 4 in das erste Gehäuseteil 3 eingesetzt ist. Die umgekehrte Variante, nämlich, daß das zweite Gehäuseteil 4 in das erste Gehäuseteil 3 eingesetzt ist, ergibt sich für den Fachmann einfach dadurch, daß er die gemäß der nachfolgenden Beschreibung für das erste Gehäuseteil 3 vorgesehene konstruktive Ausgestaltung beim zweiten Gehäuseteil 4 vorsieht und umgekehrt.

Desweiteren ist noch eine Vielzahl von unterschiedlichen Ausgestaltungen möglich, solange gewährleistet ist, daß durch ein Einsetzen des zweiten Gehäuseteils 4 in das erste Gehäuseteil 3 oder durch ein Aufsetzen des zweiten Gehäuseteils 4 auf bzw. in das erste Gehäuseteil 3 eine knopfförmige Ausgestaltung des Gehäuses 2 gegeben ist, welche - wie bereits erwähnt - neben einer kompakten und unauffälligen Bauart den Vorteil besitzt, daß hierdurch eine Kapselung der im Gehäuse 2 aufgenommenen elektronischen Schaltung S und des Antennenelements A ausgebildet ist.

Im hier gezeigten Fall besitzt das zweite Gehäuseteil 4 einen in etwa T-förmigen Querschnitt, so daß ein unterer Sockelbereich 4a dieses Gehäuseteils 4 in eine Aufnahmeöffnung 14 des dann ringförmig ausgestalteten ersten Gehäuseteils 3 im montierten Zustand des Gehäuses 2 eintritt, während ein quer zum Sockelbereich 4a verlaufender oberer Bereich 4b des zweiten Gehaüseteils die Vertiefung 5' und die Ausnehmung 6' überdeckt. Es ist aber auch durchaus möglich, daß das erste Gehäuseteil 3, vorzugsweise mit einem im wesentlichen flachen Bodenbereich 3a, schüsselförmig und demzufolge das zweite Gehäuseteil 4 plättchenförmig ausgebildet ist, d. h., daß also die Aufnahmeöffnung 14 des ersten Gehäuseteils 3 entfällt.

Wie am besten aus der Figur 1 ersichtlich ist, weist das Gehäuseoberteil 4 eine oder - wie hier gezeigt - mehrere Durchtrittsöffnungen 9 auf, welche in bekannter Art und Weise dazu dienen, den Transponder 1 wie einen konventionellen Knopf an einem Bekleidungsstück zu befestigen, indem der Transponder 1 mittels Nadel und Zwirn an dem Gewebe des Kleidungsstücks angenäht wird.

In den Figuren 4-6 ist ein zweites Ausführungsbeispiel eines Transponders 1 mit einem Gehäuse 2 dargestellt, das seinem Grundaufbau nach im wesentlichen demjenigen des ersten Ausführungsbeispiels der Figuren 1-3 entspricht, so daß gleiche oder einander entsprechende Bauteile mit den gleichen Bezugszeichen versehen werden und nicht mehr näher beschrieben werden müssen. Das knopfförmig ausgebildete Gehäuse 2 des Transponders 1 des zweiten Ausführungsbeispiels weist das erste Gehäuseteil 3 mit einem nun im wesentlichen ebenen Bodenbereich 3a auf, der von dem umlaufenden Wandelement 3b begrenzt wird. In dem durch das Wandelement 3b und den Bodenbereich 3a begrenzten Innenraum des ersten Gehäuseteits 3 ist nun das hier scheibenförmig ausgestaltete zweite Gehäuseteil 4 eingesetzt, wobei Abstandhalter 11 vorgesehen sind, die im eingesetzten Zustand das zweite Gehäuseteil 4 beabstandet zum Bodenbereich 3a des ersten Gehäuseteils 3 halten. Auf diese Art und Weise wird erreicht, daß das zweite Gehäuseteil 4 und das erste Gehäuseteil 3 einen Innenraum 2' des Gehäuses 2 begrenzen, in dem das Antennenelement A und die elektronische Schaltung S aufnehmbar sind.

Das hier beschriebene zweite Ausführungsbeispiel weist somit für das Antennenelement A und die elektronische Schaltung S einen gemeinsamen Aufnahmeraum 7 auf und unterscheidet sich hierdurch vom ersten Ausführungsbeispiel, welches getrennte Aufnahmeräume, nämlich die Vertiefung 5' und die Ausnehmung 6', für das Antennenelement A und die elektronische Schaltung S aufweist.

Die Verwendung der Abstandhalter 11 wird zwar hier bevorzugt, jedoch ist eine derartige Konstruktionsweise nicht zwingend. Vielmehr ist es auch bei dem zweiten Ausführungsbeispiel möglich, in den Bodenbereich 3a Vertiefungen 5' oder Ausnehmungen 6' zur Aufnahme des Antennenelements A und/oder der elektronischen Schaltung S einzubringen.

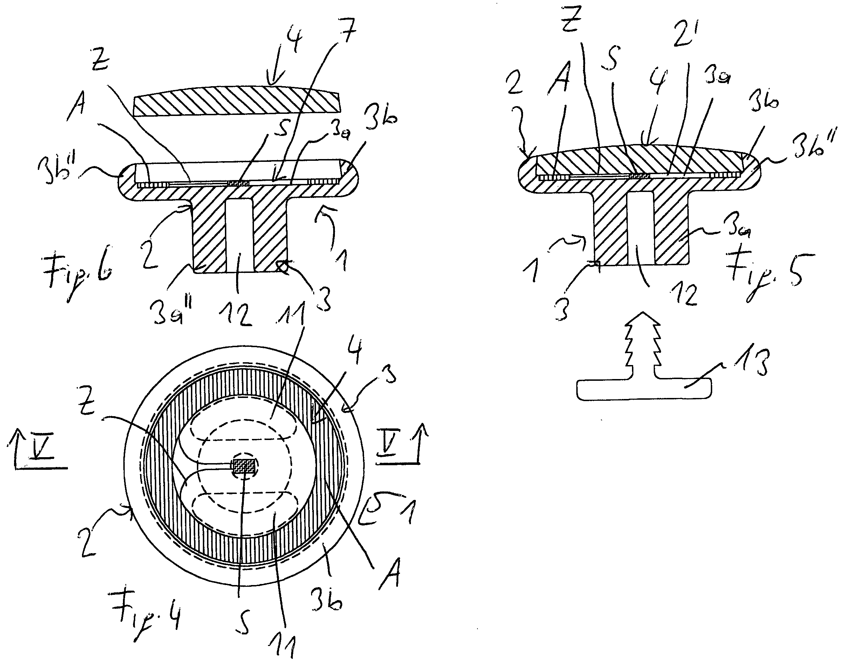

Das erste Gehäuseteil 3 ist hier im Querschnitt in etwa T-förmig ausgebildet und weist einen Sockelbereich 3a" und einen quer zum Sockelbereich 3a" verlaufenden oberen Bereich 3b" auf, wobei der Sockelbereich 3a" eine Bohrung 12 besitzt, in die ein in Figur 5 schematisch dargestelltes Befestigungselement 13 einbringbar ist, so daß der Transponder 1 über dieses Befestigungselement 13 an einem Bekleidungsstück befestigbar ist.

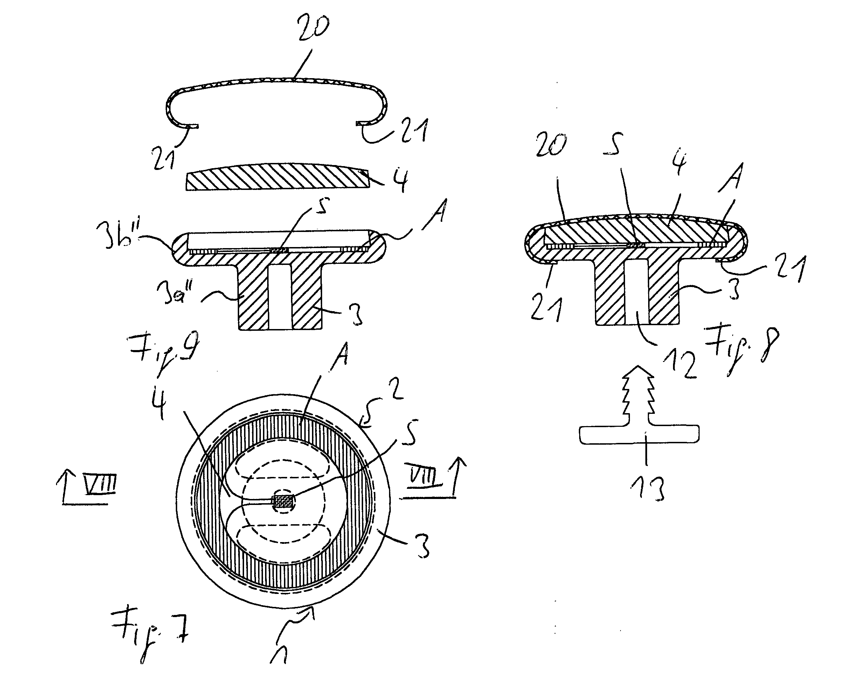

In den Figuren 7 bis 9 ist ein drittes Ausführungsbeispiel eines Transponders 1 dargestellt, welches im wesentlichen dem zweiten Ausführungsbeispiel der Figuren 4-6 entspricht, so daß hier wiederum gleiche Teile mit gleichen Bezugsziffern versehen und nicht mehr näher beschrieben werden. Der wesentliche Unterschied zwischen dem zweiten und dritten Ausführungsbeispiel besteht nun darin, daß bei dritten Ausführungsbeispiel des Transponders 1 eine Klammer 20 vorgesehen ist, welche das zweite Gehäuseteil 4 im ersten Gehäuseteil 3 arretiert, indem die Klammer 20 mit ihren Enden 21 den quer zum Sockelbereich 3a" verlaufenden oberen Bereich 3b" umgreifen und derart das zweite Gehäuseteil 4 im oder am ersten Gehäuseteil 3 lagearretiert. Eine derartige Ausgestaltung besitzt nicht nur den Vorteil, daß durch die vorzugsweise federnd ausgebildete Klammer 20 ein leichtes Öffnen des Gehäuses 2 zum Austausch der elektronischen Schaltung S und/oder des Antennenelements A mögtich ist, sondern daß auch die vorzugsweise kappenförmig ausgebildete Klammer 20 eine zusätzliche Schutzfunktion für das Gehäuse 2 ausbildet.

Ein weiterer Vorteil der Verwendung einer kappenförmig ausgebildeten Klammer 20 besteht darin, daß hierdurch einfach das optische Erscheinungsbild des Gehäuses 2 und somit des Transponders 1 verändert werden kann, da auf das aus den beiden Gehäuseteile 3, 4 bestehende Gehäuse 2 unterschiedlich gestaltete Klammern 20 aufsetzbar sind.

Es kann ebenfalls vorgesehen sein, daß anstelle der federnden Klammer 20 eine kappenförmige Schutzhaube am Gehäuse 2 angeordnet ist, welche vorzugsweise aus Metall ausgebildet ist.

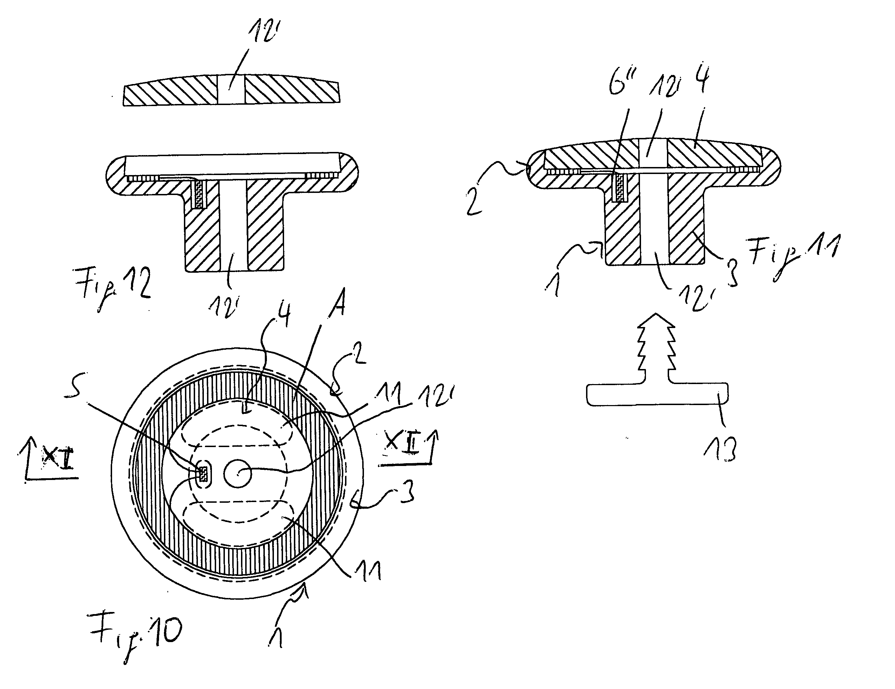

In den Figuren 10 bis 12 ist ein viertes Ausführungsbeispiel eines Transponders 1 dargestellt, dessen Grundaufbau im wesentlichen wiederum demjenigen des zweiten Ausführungsbeispiels der Figuren 4 bis 6 entspricht, so daß hier wiederum gleiche Teile mit gleichen Bezugszeichen bezeichnet und nicht mehr näher beschrieben werden.

Der wesentliche Unterschied zwischen dem vierten Ausführungsbeispiel und den vorangehenden Ausführungsbeispielen besteht nun darin, daß beim vierten Ausführungsbeispiel der Figuren 10 bis 12 die elektronische Schattung S nicht in den vom ersten Gehäuseteil 3 und vom zweiten Gehäuseteil 4 begrenzten Raum eingesetzt ist, sondern daß - entsprechend der beim ersten Ausführungsbeispiel gezeigten Vorgangsweise - vorgesehen ist, daß die elektronische Schaltung S in einer der Ausnehmung 6 des ersten Ausführungsbeispiels entsprechenden Ausnehmung 6' des Bodenbereichs 3a des ersten Gehäuseteils 3 eingesetzt ist. Hierbei wird bevorzugt, daß diese Ausnehmung 6' für das elektronische Schaltelement S außermittig angeordnet ist, so daß eine durch das erste Gehäuseteil 3 und das zweite Gehäuseteil 4 durchtretende Bohrung 12 ausbildbar ist. Eine derartige durchgehende Bohrung 12' besitzt den Vorteil, daß hierdurch in besonders einfacher Art und Weise eine dauerhafte Verbindung zwischen dem Transponder 1 und dem den Transponder 1 tragenden Material möglich ist, z. B. dadurch, daß der Transponder 1 mittels eines durch die Bohrung 12' durchtretenden Nagels oder einem ähnlichen Verbindungselement an einem Trägermaterial befestigt wird.

Zum vorgehenden Ausführungsbeispiel ist noch auszuführen, daß die Verbindung vom ersten Gehäuseteil 3 zum zweiten Gehäuseteil 4 durch ein Verkleben, Verschweißen oder Vergießen durchgeführt wird, wobei aber auch andere Verbindungsarten durchaus denkbar sind. Ebenfalls ist es auch möglich, daß das zweite Gehäuseteil 4 im ersten Gehäuseteil 3 nur klemmend gehalten wird. Es ist auch möglich, zusätzlich zur Arretierung des zweiten Gehäuseteils 4 im ersten Gehäuseteil 3 durch die Klammer 20 vorzusehen, daß auch hier ein Vergießen, Verkleben, Verschweißen, etc. der beiden Gehäuseteile 3, 4 vorgenommen wird.

Ebenfalls soll noch erwähnt werden, daß es natürlich möglich ist, das Gehäuse 2 sowohl aus flexiblen, weichen als auch aus hartem Kunststoff zu fertigen, wobei auch andere Materialien nicht ausgeschlossen sind. Ebenfalls ist es auch möglich, daß die beiden Gehäuseteile 3, 4 aus unterschiedlichen Materialien gefertigt sind.

Bei der vorstehenden Beschreibung der Ausführungsbeispiele des Transponders 1 wurde davon ausgegangen, daß das Gehäuse 2 eine kreisrunde Form aufweist. Auch dies ist nicht zwingend. Vielmehr ist es auch möglich, dem jeweiligen Einsatzzweck entsprechend das Gehäuse 2 auch oval oder polygonal auszugestalten. Ebenso ist es nicht erforderlich, daß das zweite Gehäuseoberteil 4 des ersten Ausführungsbeispiels in seiner Oberfläche eine Mulde aufweist, oder - wie beim zweiten Ausführungsbeispiel - leicht domförmig ausgestaltet ist. Die äußere Form des zweiten Gehäuseoberteils 4 kann selbstverständlich auch in den weiten Grenzen einer knopfförmigen Gestalt variiert werden.

Zusammenfassend ist festzustellen, daß es die beschriebenen Maßnähmen in vorteilhafter Art und Weise erlauben, eine kompakt bauende Vorrichtung für einen elektromagnetisch bewirkten Datenaustausch, insbesondere einen kompakt bauenden Transponder 1, auszubilden, der sich aufgrund seines knopfförmigen Gehäuses 2 durch eine besonders unauffällige und daher von konventionellen Knöpfen nicht zu unterscheidende Form auszeichnet.

## Patentansprüche

1. Gehäuse für eine Vorrichtung, insbesondere einen Transponder (1), für einen elektromagnetisch bewirkten Datenaustausch, in dem ein Antennenelement (A) und eine mit diesem verbundene elektronische Schaltung (S) aufnehmbar sind, wobei das Gehäuse (2) knopfförmig gestaltet ist und zwei Gehäuseteile (3, 4) aufweist, **dadurch gekennzeichnet, daß** eines der beiden Gehäuseteile (3, 4) einen Bodenbereich (3a) besitzt, an den sich in radialer Richtung ein umlaufender Wandbereich (3b) anschließt, daß ein zweites Gehäuseteil (4) des Gehäuses (2) in das vorgenannte erste Gehäuseteil (3) eingesetzt ist, daß die Innenkontur (3b') des Wandbereichs (3b) derart auf die Außenkontur (4') des zweiten Gehäuseteils (4) abgestimmt ist, daß das zweite Gehäuseteil (4) in den durch das Wandelement (3b) des ersten Gehäuseteils (3) begrenzten Raum einsetzbar ist, so daß durch die beiden Gehäuseteile (3, 4) ein gekapselter Innenraum (2') des Gehäuses (2) begrenzt und zwischen dem Bodenbereich (3a) des ersten Gehäuseteils (3) und dem zweiten Gehäuseteil (4) ein Aufnahmeraum (5, 6; 7) für das Antennenelement (A) und die elektronische Schattung (S) ausgebildet ist.

2. Gehäuse nach Anspruch 1, **dadurch gekennzeichnet, daß** das Gehäuse (2) einen gemeinsamen Aufnahmeraum (7) für das Antennenelement (A) und die elektronische Schaltung (S) aufweist.

3. Gehäuse nach einem der vorangehenden Ansprüche, **dadurch gekennzeichnet, daß** auf dem Bodenbereich (3a) des ersten Gehäuseteils (3) ein Abstandselement (11) aufgesetzt ist, durch welches das zweite Gehäuseteil (4) zur Ausbildung des Aufnahmeraums (7) beabstandet zum Bodenbereich (3a) angeordnet ist.

4. Gehäuse nach Anspruch 1, **dadurch gekennzeichnet, daß** das Gehäuse (2) einen ersten Aufnahmeraum (5) für das Antennenelement (A) und einen zweiten Aufnahmeraum (6) für die elektronische Schaltung (S) aufweist.

5. Gehäuse nach einem der vorangehenden Ansprüche, dadurch gekennzeithnet, daß der Aufnahmeraum (5) für das Antennenelement (A) als eine Vertiefung (5'), vorzugsweise als eine zumindest teilweise umlaufende Vertiefung (5'), im Bodenbereich (3a) des ersten Gehäuseteils (3) ausgebildet ist.

6. Gehäuse nach einem der vorangehenden Ansprüche, **dadurch gekennzeichnet, daß** der Aufnahmeraum (6) für die elektronische Schattung (S) als eine Ausnehmung (6', 6") im Bodenbereich (3a) des ersten Gehäuseteils (3) ausgebildet ist.

7. Gehäuse nach einem der vorangehenden Ansprüche, **dadurch gekennzeichnet, daß** das zweite Gehäuseteil (4) scheibenförmig, insbesondere plättchenförmig, ausgebildet ist.

8. Gehäuse nach einem der vorangehenden Ansprüche, **dadurch gekennzeichnet, daß** das erste Gehäuseteil (3) oder das zweite Gehäuseteil (4) einen im wesentlichen T-förmigen Querschnitt aufweist.

9. Gehäuse nach Anspruch 8, **dadurch gekennzeichnet, daß** das zweite Gehäuseteil (4) einen unteren Sockelbereich (4a) aufweist, der in eine Aufnahmeöffnung (14) des ersten Gehäuseteils (3) eintretbar ist.

10. Gehäuse nach Anspruch 8 oder 9, **dadurch gekennzeichnet, daß** ein quer zum Sockelbereich (4a) verlaufender oberer Bereich (4b) des zweiten Gehäuseteils (4) im zusammengesetzten Zustand des Gehäuses (2) den Aufnahmeraum (5, 6; 7) das Antennenelement (A) und die elektronische Schaltung (S) überdeckt.

11. Gehäuse nach einem der vatangehenden Ansprüche, **dadurch gekennzeichnet, daß** das erste Gehäuseteil (3) ringförmig ausgestaltet und die Aufnahmeöffnung (14) aufweist.

12. Gehäuse nach einem der vorangehenden Ansprüche, **dadurch gekennzeichnet, daß** das Gehäuse (2) mindestens eine Durchtrittsöffnung (9) aufweist, durch die das Gehäuse (2) an einem Trägermaterial befestigbar ist.

13. Gehäuse nach einem der vorangehenden Ansprüche, **dadurch gekennzeichnet, daß** das zweite Gehäuseteil (4) eine Bohrung (12, 12') aufweist, in die ein Befestigungselement (13), über die das Gehäuse (2) an einem Trägermaterial befestigbar ist, einsetzbar ist.

14. Gehäuse nach einem der vorangehenden Ansprüche, **dadurch gekennzeichnet, daß** das Gehäuse (2) eine Klammer (20) aufweist, durch die das zweite Gehäuseteil (4) im oder am ersten Gehäuseteil (3) arretierbar ist, wobei die Klammer (20) vorzugsweise kappenförmig ausgebildet ist.

15. Gehäuse nach einem der vorangehenden Ansprüche, **dadurch gekennzeichnet, daß** das Gehäuse (2) eine Schutzhaube aufweist.

16. Gehäuse nach einem der vorangehenden Ansprüche, **dadurch gekennzeichnet, daß** das erste (3) und das zweite Gehäuseteil (4) des Gehäuses (2) miteinander durch Verkleben, Verschweißen, Vergießen oder durch eine Klemmung verbunden sind.

17. Transponder für einen elektromagnetisch bewirkten Datenaustausch, **gekennzeichnet durch** ein Gehäuse (2) nach einem der Ansprüche 1-16.
